# FASCICULE DE BREVET EUROPEEN

(11) **EP 1 530 697 B1**
(45) Date de publication et mention de la délivrance du brevet: **11.10.2006**
(21) Numéro de dépôt: 03769527.7
(22) Date de dépôt: 21.08.2003
(51) Int. Cl.: F25B 17/08

(54) **PROCÉDÉ ET DISPOSITIF DE SÉPARATION OU DE PURIFICATION D'UN FLUIDE**
VERFAHREN UND VORRICHTUNG ZUR ABTRENNUNG ODER REINIGUNG EINES FLUIDUMS
PROCESS AND DEVICE FOR SEPARATING OR PURIFYING A FLUID

(30) Priorité: 21.08.2002 FR 0210432
(43) Date de publication de la demande: 18.05.2005
(73) Titulaire: CONSERVATOIRE NATIONAL DES ARTS ET METIERS, F-75141 Paris Cédex 03 (FR)
(72) Inventeur: MEUNIER, Francis, F-75006 Paris (FR); CHALFEN, Jean, Bertrand, F-78470 Saint Remy Les Chevreuse (FR); MATIVET - TENAUD, Anne, F-92310 Sevres (FR)
(74) Mandataire: Pontet, Bernard
(86) Numéro de dépôt international: PCT/FR2003/002557
(87) Numéro de publication internationale: WO 2004/018948

(56) Documents cités:
- EP-A- 0 289 446
- PATENT ABSTRACTS OF JAPAN vol. 2000, no. 09, 13 octobre 2000 (2000-10-13) & JP 2000 179978 A (OSAKA GAS CO LTD), 30 juin 2000 (2000-06-30)
- PATENT ABSTRACTS OF JAPAN vol. 008, no. 246 (C-251), 10 novembre 1984 (1984-11-10) & JP 59 127630 A (BABCOCK HITACHI KK), 23 juillet 1984 (1984-07-23)
- PATENT ABSTRACTS OF JAPAN vol. 009, no. 317 (C-319), 12 décembre 1985 (1985-12-12) & JP 60 153919 A (HITACHI SEISAKUSHO KK), 13 août 1985 (1985-08-13)
- PATENT ABSTRACTS OF JAPAN vol. 013, no. 275 (C-610), 23 juin 1989 (1989-06-23) & JP 01 070141 A (SUMITOMO HEAVY IND LTD), 15 mars 1989 (1989-03-15)

## Description

La présente invention concerne un procédé de séparation ou de purification d'un fluide à traiter, tel que défini dans le préambule de la revendication 1. Elle concerne aussi un dispositif pour la mise en oeuvre d'un tel procédé.

Un tel procédé de purification peut être utilisé, notamment pour éliminer d'un mélange gazeux des polluants du type composés organiques volatils.

Pour adsorber un gaz à séparer contenu dans un mélange gazeux à traiter, par exemple à purifier, on utilise un adsorbant, c'est à dire un matériau qui retient à sa surface les molécules du gaz à séparer. La capacité d'adsorption de l'adsorbant est limitée. Il convient donc de régénérer régulièrement l'adsorbant. Il existe deux procédés pour régénérer l'adsorbant, soit par modulation de température, soit par modulation de pression.

Dans un procédé par modulation de température dit "à chauffage direct" on fait passer en contact direct sur l'adsorbant, d'abord un premier flux constitué par le mélange gazeux à purifier, puis, par un même circuit, un deuxième flux gazeux constitué d'un gaz de purge. Ce gaz de purge est un gaz réputé non adsorbable ou peu adsorbable telle de la vapeur d'eau. Le passage du mélange à purifier se fait "à froid" et celui du gaz de purge "à chaud", c'est à dire que le gaz de purge est notablement plus chaud que le mélange à traiter et que lors du passage du flux de purge l'adsorbant est porté à une température plus élevée que celle lors du passage du mélange à séparer, de sorte que le gaz séparé et adsorbé est libéré de l'adsorbant puis entraîné par le gaz de purge. L'adsorbant ainsi débarrassé du gaz adsorbé est régénéré. Le procédé est cyclique, une étape d'adsorption étant suivie d'une étape de purge.

On refroidit ensuite l'adsorbant par le passage d'un gaz de purge froid avant une nouvelle adsorbsion. Cependant, cela présente divers inconvénients. Un premier inconvénient est une forte consommation de gaz de purge, notamment nécessaire pour le réchauffage de l'adsorbant. Un deuxième inconvénient est la durée du procédé qui est pénalisé par la durée de la phase de purge, notamment celle nécessaire au réchauffage de l'adsorbant. Un troisième inconvénient, induit par le premier du fait de la forte consommation en gaz de purge, donc de la forte dissolution du gaz séparé dans le gaz de purge, est la difficulté à récupérer le gaz ainsi séparé, par exemple s'il est soluble dans l'eau et que le gaz de purge est de la vapeur d'eau. Ce procédé n'est donc pas utilisable si le gaz séparé doit être récupéré, soit parce qu'il a une valeur, par exemple de l'hydrogène, soit parce que c'est un polluant.

Le but de l'invention est de proposer un procédé et un dispositif de mise en oeuvre de ce procédé permettant de limiter les inconvénients cités, c'est à dire limiter la consommation en gaz de purge et réduire la durée d'un cycle.

Selon l'invention, ce but est atteint grâce à un procédé et un dispositif tels que définis en revendications 1 et 8, respectivement. Le procédé est mis en oeuvre dans un dispositif comprenant un échangeur de chaleur pour le passage d'un fluide caloporteur destiné à réchauffer et un circuit de séparation réservé au passage alterné du mélange gazeux et du gaz de purge. Ce procédé comprend une étape de séparation durant laquelle on refroidit l'adsorbant et on fait passer le mélange gazeux dans le circuit de séparation, puis une étape de régénération durant laquelle on chauffe l'adsorbant à l'aide d'un fluide caloporteur et l'on fait passer un gaz de purge dans le circuit de séparation. Ce procédé est caractérisé en ce que l'on choisit le fluide caloporteur pour qu'il change de phase lors du chauffage de l'adsorbant. Ainsi, la capacité thermique du fluide caloporteur étant supérieure à celle du gaz de purge, le temps de chauffage est beaucoup plus court et le gaz de purge n'étant pas utilisé au chauffage, la quantité utilisée est bien plus faible. Par exemple le temps de régénération peut être de l'ordre de dix fois moins long. Le procédé étant cyclique les deux étapes sont successives mais leur ordre est arbitraire.

Ainsi, le fluide caloporteur peut être de l'eau. Lors de l'étape de régénération l'eau est introduite dans l'échangeur sous forme de vapeur saturante, éventuellement surchauffée et la vapeur se condense en réchauffant l'adsorbant. Un tel procédé est compatible avec un procédé de récupération d'énergie basse température, il est donc particulièrement économique.

Lors de l'étape de séparation, le refroidissement peut être assuré par le seul mélange à purifier, l'écoulement du fluide caloporteur étant stoppé. Le refroidissement est alors plus lent mais peut être suffisant. On peut aussi utiliser un autre fluide caloporteur pour accélérer le refroidissement de l'adsorbant. L'autre fluide caloporteur peut aussi changer de phase, par exemple de l'eau qui s'évapore.

Lors du chauffage avec changement de phase du fluide caloporteur, les coefficients d'échange de chaleur obtenus côté fluide caloporteur sont très grands. Ils peuvent atteindre 5000 à 50000 W/m²/K en utilisant de l'eau en tant que fluide caloporteur. Ceci permet un chauffage rapide, par exemple réduit à une demi-heure au lieu de plusieurs heures si l'on utilisait un chauffage sans changement de phase. Ceci réduit donc notablement l'immobilisation non productive d'une telle installation pendant le temps nécessaire à la régénération de l'adsorbant.

Un changement de phase lors du refroidissement impose généralement un circuit de refroidissement hermétique et l'absence d'air ou de tout gaz incondensable. On utilisera donc préférablement un refroidissement avec de l'eau liquide ce qui permet d'utiliser un circuit de refroidissement ouvert à l'atmosphère, c'est à dire qui n'est pas hermétique. Les coefficients obtenus sont nettement suffisants. En effet, le chauffage et le refroidissement ne sont pas des étapes symétriques. En premier lieu, l'étape d'adsorption peut durer plusieurs heures; cette durée d'adsorption dépend en particulier du débit du mélange gazeux, de l'adsorbant utilisé, du ou des gaz à adsorber, de leur concentration dans le mélange et de la géométrie d'une colonne destinée à contenir l'adsorbant. Or, pendant l'adsorption, la circulation du mélange gazeux à traiter, plus froid que la température de régénération, contribue au refroidissement de l'adsorbant. De plus, lors de la phase d'adsorption, il n'est pas nécessaire que l'adsorbant atteigne rapidement sa température la plus basse. En effet, l'adsorption peut se produire lorsque l'adsorbant n'est encore que partiellement refroidi. Ainsi, le refroidissement initial obtenu par la simple circulation d'eau liquide, ou partiellement vaporisée, est assez rapide pour permettre d'engager rapidement l'étape d'adsorption.

Lors de l'étape d'adsorption, on peut en outre soumettre l'adsorbant à un vide partiel dans le circuit de séparation, par exemple avant ou après le passage du gaz de purge.

Un tel procédé de régénération d'un adsorbant est aussi applicable à d'autres procédés et dispositifs, notamment pour la régénération d'un adsorbant dans un circuit de réfrigération, comme le montre l'un des exemples suivants.

D'autres particularités et avantages de l'invention ressortiront encore de la description ci-après, relative à des exemples non limitatifs.

Aux dessins annexés :
- la figure 1 est une représentation schématique d'un dispositif 1 pour la purification et/ou la séparation de gaz selon l'invention; et,
- la figure 2 est une représentation schématique d'un dispositif de réfrigération, adapté pour utiliser un dispositif de régénération selon l'invention.

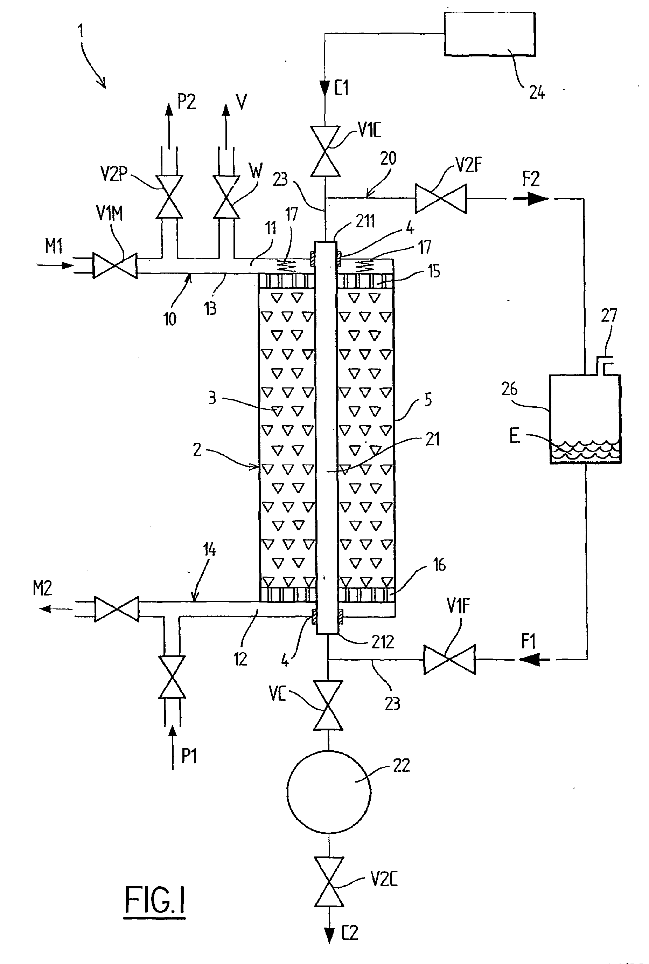

La figure 1 représente un dispositif 1 pour la purification et/ou la séparation de gaz. Le dispositif 1 comprend un circuit d'adsorption 10 et un circuit échangeur 20. Le circuit d'adsorption 10 comprend principalement une colonne d'adsorption 2, disposée verticalement et contenant de l'adsorbant 3. La colonne 2 comprend un orifice haut 11 et un orifice bas 12 pour la circulation de flux gazeux la traversant.

L'adsorbant est sous forme de particules afin de présenter une surface d'adsorption la plus grande possible, de sorte que le rendement d'adsorption soir optimal. Une première plaque poreuse 16, disposée à la base de la colonne, permet le passage des flux de gaz tout en retenant l'adsorbant. Une deuxième plaque poreuse 15 est disposée au-dessus de l'adsorbant et y est plaquée par des ressorts 17. Ainsi, ces deux plaques poreuses, en comprimant l'adsorbant, évitent qu'il ne soit fluidisé et entraîné par les flux gazeux.

Le circuit d'adsorption 10 comprend en outre des moyens de commutation hauts 13 et des moyens de commutation bas 14, respectivement reliés aux orifices haut 11 et bas 12. Les moyens de commutation hauts comprennent une vanne d'admission V1M pour commander l'admission M1 d'un mélange gazeux à traiter, une vanne d'évacuation V2P pour commander l'évacuation P2 d'un gaz de purge et une vanne de vide W pour mettre en communication V l'intérieur de la colonne 2 avec une pompe à vide au travers de l'orifice haut 11.

Les moyens de commutation bas 14 comprennent une vanne d'évacuation V2M pour commander l'évacuation du mélange gazeux traité et une vanne de d'admission V1 P pour commander l'admission du gaz de purge au travers de l'orifice bas.

Le circuit échangeur comprend un échangeur de chaleur chargé de chauffer et de refroidir l'adsorbant. De l'eau est utilisée comme fluide caloporteur. L'échangeur est un tube à ailettes 21 en acier, placé verticalement dans la colonne 2, au coeur de l'adsorbant. La compression exercée par les plaques poreuses 15,16 contribue en outre à appliquer l'adsorbant contre le tube à ailettes de sorte qu'il n'y ait pas de chemin préférentiel pour les flux gazeux ce qui réduirait l'adsorption et pour améliorer les transferts thermiques.

Des moyens d'étanchéité 4 sont disposés autour du tube 21 à ailettes aux endroits où le tube traverse l'enveloppe 5 de la colonne 2. Ces moyens d'étanchéité sont en outre prévu pour assurer une dilatation différentielle entre l'enveloppe 5 et le tube 21, engendrée par les cycles alternés de refroidissement et de chauffage.

Une extrémité haute 211 du tube 21 communique avec une arrivée C1 d'eau sous forme de vapeur surchauffée commandée par une vanne d'admission haute V1C, et une évacuation haute F2 pour de l'eau sous forme de vapeur ou de liquide commandée par une vanne d'évacuation V2F. La vanne d'admission haute V1 C permet de séparer le reste du circuit d'échange d'avec un générateur 24 pour la vapeur.

Une extrémité basse 212 du tube 21 communique 23 avec une arrivée F1 d'eau sous forme liquide commandée par une vanne d'admission basse V1F, et un vase de collecte 22 dont l'entrée est commandée par une vanne de collecte VC. Le vase de collecte est prévu pour la collecte d'un condensat issu de la vapeur d'eau surchauffée. Le vase de collecte est donc disposé de sorte que le condensat puisse s'écouler naturellement depuis le tube 21, où il se forme, jusqu'au vase 22, lorsque la vanne de collecte VC est ouverte. Le vase de collecte est en outre équipé d'une vanne de vidange V2C.

On va maintenant décrire un procédé selon l'invention en commençant par une étape de régénération de l'adsorbant 5. On suppose qu'une étape d'absorption a précédé l'étape de régénération de sorte que du gaz a été adsorbé par l'adsorbant.

L'adsorbant 5 est chauffé pour être régénéré. Dans le circuit d'échange 20, on ferme d'abord un circuit de refroidissement, c'est à dire que la vanne V1F d'admission d'eau à l'extrémité basse du tube 21 et la vanne V2F d'évacuation à l'extrémité haute du tube sont fermées. Un circuit de chauffage est ensuite ouvert, c'est à dire que la vanne V1C d'admission de vapeur à l'extrémité haute du tube 21 et la vanne de collecte VC à l'extrémité basse du tube sont ouvertes. La vanne de vidange V2C du vase 22 est maintenue ouverte quelques instants après l'admission de la vapeur pour purger le tube 21 des gaz qu'il contient puis elle est fermée afin d'isoler le circuit de chauffage, en particulier pour éviter les fuites de vapeur. La pression dans le tube s'établie alors à une valeur proche de celles dans le générateur de vapeur, et les températures sur des parois du tube et celles des ailettes montent très rapidement à des valeurs proches de la température saturante de la vapeur. Le gradient de température dans l'adsorbant qui se réchauffe, d'abord très fort, diminue rapidement. Pendant le chauffage, la vapeur est donc admise en partie haute du tube et se condense à mesure où elle parcourt le tube de haut en bas en libérant sa chaleur. Le circuit de chauffage étant une cavité fermée, le volume de condensat formé est sensiblement proportionnel à la puissance thermique échangée.

Conjointement, dans le circuit 10 d'adsorption, La vanne W de vide, la vanne V1 M d'admission du mélange à traiter et la vanne V2M d'évacuation du mélange traité sont fermées de sorte que le mélange ne circule pas dans la colonne 2. Il est possible de réaliser un préchauffage avant d'admettre du gaz de purge dans la colonne. Ainsi, le chauffage débute sans qu'aucun flux ne circule dans la colonne 2, les vannes V1P et V2P pour la circulation du gaz de purge étant aussi fermées. Après le préchauffage, la vanne V1P pour l'admission du gaz de purge, et la vanne V2P pour son évacuation sont ouvertes, de sorte que le gaz de purge circule de bas en haut dans la colonne 2 en s'y chargeant du gaz libéré de l'adsorbant, puis le gaz de purge est évacué au travers de la vanne d'évacuation V2P, en direction d'un dispositif de récupération, par exemple pour être filtré ou incinéré. La purge se poursuit jusqu'à ce que la concentration du gaz libéré, dans le gaz de purge, ait atteint un seuil minimum prédéfini. Ce seuil est défini par des essais préalables lors d'une étape de mise au point afin de déterminer une durée de purge généralement nécessaire pour atteindre ce seuil. C'est lorsque cette durée de purge est atteinte que la purge est arrêtée. On ferme pour cela la vanne V1 C d'admission de la vapeur et la vanne de collecte VC, puis on ouvre la vanne de purge V2C pour vider le vase 22 des condensats qui s'y sont accumulés durant le chauffage. On ferme aussi les vannes V1P et V2P pour la circulation du gaz de purge. Le volume du vase 22 est choisi afin qu'il puisse contenir l'ensemble du condensat normalement produit durant la phase de chauffage.

On notera que le gaz de purge circule de bas en haut alors que le mélange traité circule de haut en bas. Ainsi, on définit dans l'adsorbant, un gradient de "pollution" par le gaz adsorbé. En effet, dans la partie haute, plus polluée, le mélange entre chargé du gaz à adsorber alors que le gaz de purge en sort chargé de ce gaz. Cette disposition permet, en nettoyant la zone basse, plus propre, avec un gaz de purge peu ou pas chargé, de maintenir cette zone la plus propre possible afin de s'assurer que dans l'étape d'adsorption, le mélange en sortira le moins chargé possible. De même, le fait que le gaz de purge sorte par la partie la plus polluée, permet de s'assurer qu'il se charge le plus possible en gaz libéré.

Ensuite, dans cet exemple, on met au vide le circuit d'adsorption. Pour cela, les quatre autres vannes V1P,V2P,V1M,V2M du circuit d'adsorption étant maintenues fermées on ouvre la vanne de vide W, puis l'on pompe le gaz dans la colonne. L'adsorbant étant encore chaud et soumis à une dépression, cela permet de compléter la régénération de l'adsorbant. Il convient ensuite de ramener la colonne 2 à la pression atmosphérique, ou à sa pression de fonctionnement, en y introduisant du gaz de purge pur, en ouvrant la vanne V1P d'admission de gaz de purge, après avoir fermé la vanne de vide W.

On peut aussi envisager un pompage "à froid", c'est à dire avant ou au tout début du chauffage. Ainsi, en amorçant la libération du gaz adsorbé on s'assure que la concentration en gaz libéré sera importante. Cette option est particulièrement utile lorsque l'on a un grand volume à régénérer, ainsi le gaz libéré sera moins dilué dans le mélange résiduel, et pourra être récupéré plus concentré dés le début du chauffage. On peut alors asservir l'ouverture de la vanne V2P d'évacuation du gaz de purge à la pression dans la colonne, en ouvrant cette vanne lorsque, après avoir refermé la vanne de vide W, une pression suffisante est rétablie dans la colonne 2, c'est à dire que suffisamment de gaz a été libéré de l'adsorbant pour rétablir cette pression. On peut maintenir fermée la vanne d'admission V1P du gaz de purge, tant que le chauffage est suffisant pour entretenir une évacuation naturelle du gaz libéré. La circulation du gaz de purge est ensuite établie lorsque le chauffage n'est plus suffisant.

On va maintenant décrire une étape d'adsorption, consécutive à l'étape de régénération précédemment décrite.

On refroidit préalablement l'adsorbant. Pour cela on ferme la vanne V1 C d'admission de la vapeur et la vanne VC de collecte. Puis on ouvre la vanne d'évacuation haute V2F avant d'ouvrir la vanne V1F d'admission d'eau liquide.

Au début l'adsorbant et le tube étant chaud, l'eau se vaporise ce qui permet d'obtenir de forts coefficients de transfert thermique, donc un refroidissement rapide. C'est un mélange d'eau liquide et de vapeur qui sort du tube, et qui est évacué puis séparé dans un séparateur 26 équipé de moyens 27 de mise à la pression atmosphérique. Lorsque, la température de l'adsorbant est suffisamment basse, on met en circulation le mélange gazeux à traiter, par exemple à séparer ou à purifier. C'est à dire que, les vannes W,V 1 P,V2P qui commandent la mise au vide et la circulation du gaz de purge étant fermées, on ouvre les vannes d'admission V1M et d'évacuation V2M du mélange. Le mélange circule alors dans la colonne 2 en se purifiant. Le dispositif 1 est conçu pour que le mélange ainsi traité réponde, lorsqu'il est évacué à des normes de concentration en le gaz qui aurait du être adsorbé. Il se forme durant l'adsorption, un "front d'adsorption", c'est à dire un gradient d'adsorption allant de la partie haute de l'adsorbant, la plus polluée, en diminuant vers la partie basse, propre. Ce front se déplace vers le bas au cours de l'étape d'adsorption. On arrête l'étape d'adsorption avant que le front n'ait atteint la partie basse, donc lorsque la partie basse est encore propre, c'est à dire que le mélange lorsqu'il passe dans la partie basse est suffisamment dépollué pour qu'il n'y ait plus d'adsorption.

Si plusieurs espèces de gaz sont adsorbées, leurs affinités avec l'adsorbant pouvant être différentes, il peut y avoir un front pour chaque espèce de gaz. On peut ainsi faire une séparation en sélectionnant convenablement l'adsorbant et en utilisant des temps d'adsorption et de régénération appropriés,

Une fois la phase d'adsorption terminée, le cycle se poursuit par une nouvelle phase de régénération.

On utilisera de préférence pour le refroidissement de l'eau E déminéralisée ou convenablement traitée de façon à éviter l'entartrage du circuit d'échange, et particulièrement du tube 2.

On notera qu'une installation complète, si elle doit fonctionner en continu, comprend plusieurs colonnes de sorte que lorsque l'on régénère l'adsorbant de l'une, l'adsorption puisse se faire sur une autre colonne.

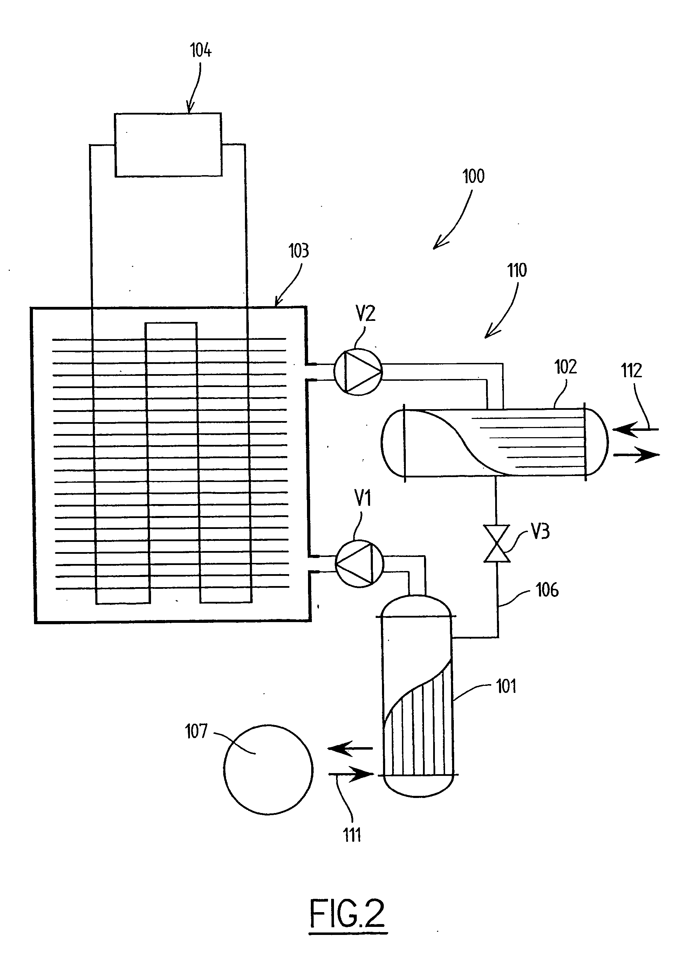

LA figure 2 représente schématiquement un dispositif de réfrigération 100, utilisant un dispositif de régénération 104 selon l'invention. Le dispositif de réfrigération comprend principalement un circuit de réfrigération 110 dans lequel circule un réfrigérant. Les principaux éléments du circuit de réfrigération sont un évaporateur 101, un condenseur 102, un condenseur 103 et un adsorbeur 103 pour contenir un adsorbant. L'évaporateur 101 est relié à l'adsorbeur 103 au travers d'une première vanne V1 pour la circulation du réfrigérant depuis l'évaporateur vers l'adsorbeur. L'adsorbeur est relié au condenseur 102 au travers d'une deuxième vanne V2 pour la circulation du réfrigérant depuis l'adsorbeur vers le condenseur. Le retour du réfrigérant depuis le condenseur 102 vers l'évaporateur 103 se fait par un tube 106 et il est régulé par un détendeur V3. L'ensemble constitué par le tube 106 équipé du détendeur V3, peut être remplacé par un tube capillaire.

La réfrigération se fait selon un cycle intermittent durant lequel le fluide est condensé dans le condenseur 102 sous haute pression HP, et évaporé dans l'évaporateur 101 sous basse pression BP.

L'évaporateur est relié 111 à une charge 107 à refroidir, pour laquelle le dispositif de réfrigération 100 sert de pompe à chaleur. La charge 107 peut être un réseau d'eau glacée. La chaleur issue du condenseur est évacuée au travers d'un rejet thermique 102. L'adsorbant, donc l'adsorbeur et le réfrigérant contenu dans l'adsorbeur, est alternativement réchauffé et refroidi par le dispositif de régénération 104. Le dispositif de régénération et constitué d'un circuit d'échange de chaleur dans lequel circule un fluide caloporteur.

On va maintenant décrire un cycle de réfrigération en supposant que l'on commence sa description lorsque l'adsorbant vient d'être régénéré, et a atteint sa température maximale, et que le réfrigérant dans l'adsorbeur est sous la haute pression HP. Les vannes V1,V2,V3 sont alors fermées, l'adsorbant, donc l'adsorbeur est progressivement refroidi et la pression du réfrigérant dans l'adsorbeur diminue. Et l'adsorbant adsorbe au moins partiellement le réfrigérant.

Lorsque la pression dans l'adsorbeur atteint la basse pression BP, la première vanne V1 est ouverte. L'évaporation du réfrigérant commence alors dans l'évaporateur 101. L'adsorbeur continuant à être refroidi, sa température diminue, et l'adsorption peut se poursuivre tant que l'adsorbant n'est pas saturé de réfrigérant. Lorsque la température de l'adsorbant cesse de baisser, l'adsorbant se sature. Un équilibre de pression s'établit dans l'adsorbeur et l'évaporateur et l'évaporation cesse.

On ferme alors la première vanne V1 tandis que la deuxième vanne V2 est maintenue fermée. On réchauffe alors l'adsorbant selon un procédé selon l'invention, tel que précédemment décrit. Notamment, grâce à un fluide caloporteur qui change de phase. L'augmentation de température de l'adsorbant entraîne sa régénération donc une désorption du réfrigérant sous forme de vapeur surchauffée. Par conséquent, l'adsorbeur étant un récipient clos, la pression dans l'adsorbeur augmente.

Lorsque la pression dans l'adsorbeur atteint la pression HP, on ouvre alors la deuxième vanne V2, et le réfrigérant, pénètre sous forme de vapeur dans le condenseur 102 ou il est progressivement condensé. La condensation se poursuit aussi longtemps que de la vapeur est produite dans l'adsorbeur, c'est à dire jusqu'à ce que l'adsorbant soit totalement régénéré.

Lorsque la condensation cesse, le réfrigérant retournant sous forme liquide dans l'évaporateur 101 par le tuyau 106, le cycle reprend tel que décrit plus haut.

L'utilisation d'un fluide caloporteur changeant de phase, en particulier pour régénérer l'adsorbant, permet d'accélérer le cycle de réfrigération.

Bien sûr, l'invention n'est pas limitée aux exemples qui viennent d'être décrits et de nombreux aménagements peuvent être apportés à ces exemples sans sortir du cadre de l'invention telle que définie dans les revendications.

En particulier, la mise au vide après la purge est une étape optionnelle qui peut être choisie selon le type de matériel utilisé ou de gaz traités.

Au lieu d'un seul tube à ailettes, il peut y en avoir plusieurs, disposés parallèles dans une même colonne. Le tube à ailettes a été placé verticalement afin que la vapeur se positionne naturellement en partie supérieure et le liquide en partie inférieure du circuit d'échange. Il peut être disposé différemment et par exemple avoir une forme hélicoïdale.

Le même procédé décrit ici pour la purification d'un mélange gazeux peut être utilisé pour la purification d'autres fluides, notamment un mélange liquide.

## Revendications

1. Procédé de séparation ou de purification d'un fluide à traiter, comprenant:
- une étape de séparation durant laquelle on fait passer le fluide dans/sur un adsorbant (3) et on refroidit l'adsorbant; et,
- une étape de régénération durant laquelle on chauffe l'adsorbant avec un fluide caloporteur et l'on fait passer un fluide de purge sur l'adsorbant, **caractérisé en ce que** le fluide caloporteur change de phase.

2. Procédé selon la revendication 1, **caractérisé en ce que** l'on fait un vide partiel au début de l'étape de régénération.

3. Procédé selon la revendication 1 ou 2, **caractérisé en ce que** l'on fait un vide partiel à la fin de l'étape de régénération.

4. Procédé selon l'une des revendications 1 à 3, **caractérisé en ce que** l'on refroidit l'adsorbant avec un fluide caloporteur.

5. Procédé selon la revendication 4 **caractérisé en ce que** le liquide caloporteur pour refroidir l'adsorbant change de phase.

6. Procédé selon l'une des revendications 1 à 5, **caractérisé en ce qu'**un fluide caloporteur est de l'eau.

7. Procédé selon l'un des revendications 1 à 6, **caractérisé en ce que** le fluide à traiter est un mélange gazeux.

8. Dispositif (1) de séparation ou de purification d'un fluide à traiter, comprenant une colonne (2) d'adsorption qui contient de l'adsorbant (3) et un circuit (20) d'échange de chaleur dont un échangeur (21) est disposé au coeur de l'adsorbant, **caractérisé en ce que** le circuit d'échange comprend en outre une admission (V1C) pour un fluide caloporteur sous forme de vapeur, disposée à une première extrémité (211) de l'échangeur, et une évacuation (VC) pour un condensat de ladite vapeur, disposée à une deuxième extrémité (212) dudit échangeur.

9. Dispositif selon la revendication 8, **caractérisé en ce qu'**il comprend en outre un générateur (24) de vapeur.

10. Dispositif selon la revendication 8 ou 9, **caractérisé en ce qu'**il comprend en outre une admission (V1F) pour un autre fluide caloporteur sous forme liquide, disposé à la deuxième extrémité de l'échangeur, et une évacuation (V2F) pour ce fluide caloporteur, sous forme liquide et/ou de vapeur, disposé à la première extrémité dudit l'échangeur.

11. Dispositif selon la revendication 10, **caractérisé en ce que** l'évacuation de l'autre fluide caloporteur sous forme liquide et/ou de vapeur se fait jusqu'à un dispositif de séparation (26) avec mise à la pression atmosphérique (27).

## Claims

1. Method of separation or purification of a fluid to be treated, including:
- a step of separation during which one makes pass the fluid in/on an adsorbent (3) and one cools the adsorbent; and,
- a step of regeneration during which one heats the adsorbent with a coolant and one makes pass a fluid for purging on the adsorbent, **characterized in that** the coolant changes phase.

2. Method according to claim 1, **characterized in that** one makes a partial vacuum at the beginning of the step of regeneration.

3. Method according to claim 1 or 2, **characterized in that** one makes a partial vacuum at the end of the step of regeneration.

4. Method according to one of claims 1 to 3, **characterized in that** one cools the adsorbent with a coolant.

5. Method according to claim 4 **characterized in that** the coolant to cool the adsorbent changes phase.

6. Method according to one of claims 1 to 5, **characterized in that** a coolant is water.

7. Method according to one of claims 1 to 6, **characterized in that** the fluid to be treated is a gas mixture.

8. Device (1) for separation or purification of a fluid to be treated, including a column (2) of adsorption which contains adsorbent (3) and a circuit (20) of heat transfer whose exchanger (21) is arranged in the middle of the adsorbent, **characterized in that** the circuit of exchange furthermore includes an admission (V1C) for a coolant in the form of vapour, arranged at a first end (211) of the exchanger, and an evacuation (VC) for a condensate of said vapour, arranged at a second end (212) of said exchanger.

9. Device according to claim 8, **characterized in that** it furthermore includes a generator (24) of vapour.

10. Device according to claim 8 or 9, **characterized in that** it furthermore includes an admission (V1F) for another coolant in liquid form, arranged at the second end of the exchanger, and an evacuation (V2F) for this coolant, in liquid and/or vapour form, arranged at the first end of said exchanger.

11. Device according to claim 10, **characterized in that** the evacuation of the other coolant in liquid and/or vapour form is done toward a device of separation (26) with setting at the atmospheric pressure (27).

## Patentansprüche

1. Verfahren zum Abtrennen oder Reinigen eines zu behandelnden Fluids, umfassend:
- einen Trennschritt, in dem man das Fluid in/über ein Adsorbtionsmittel (3) leitet und das Adsorptionsmittel kühlt, und
- einen Regenerierungsschritt, in dem man das Adsorptionsmittel mit einem Wärmeübertragerfluid erwärmt und ein Spülfluid über das Adsorptionsmittel leitet,
**dadurch gekennzeichnet, dass** das wärmeübertragerfluid seine Phase wechselt.

2. Verfahren nach Anspruch 1, **dadurch gekennzeichnet, dass** man zu Beginn des Regenerierungsschritts ein Teilvakuum herstellt.

3. Verfahren nach Anspruch 1 oder 2, **dadurch gekennzeichnet, dass** man am Ende des Regenerierungsschritts ein Teilvakuum herstellt.

4. Verfahren nach einem der Ansprüche 1 bis 3, **dadurch gekennzeichnet, dass** man das Adsorptionsmittel mit einem wärmeübertragerfluid kühlt.

5. Verfahren nach Anspruch 4, **dadurch gekennzeichnet, dass** die Wärmeübertragerflüssigkeit zum Kühlen des Adsorptionsmittels ihre Phase wechselt.

6. Verfahren nach einem der Ansprüche 1 bis 5, **dadurch gekennzeichnet, dass** ein Wärmeübertragerfluid Wasser ist.

7. Verfahren nach einem der Ansprüche 1 bis 6, **dadurch gekennzeichnet, dass** das zu behandelnde Fluid eine Gasmischung ist.

8. Vorrichtung (1) zum Abtrennen oder Reinigen eines zu behandelnden Fluids, umfassend eine Adsorptionssäule (2), die Adsorptionsmittel (3) enthält, und einen Wärmetauschkreis (20), von dem ein Wärmetauscher (21) im Kern des Adsorptionsmittels angeordnet ist, **dadurch gekennzeichnet, dass** der Wärmetauschkreis ferner einen an einem ersten Ende (211) des Wärmetauschers angeordneten Einlass (V1C) für ein wärmeübertragerfluid in Form von Dampf und einen an einem zweiten Ende (212) des Wärmetauschers angeordneten Ablass (VC) für ein Kondensat dieses Dampfs umfasst.

9. Vorrichtung nach Anspruch 8, **dadurch gekennzeichnet, dass** sie ferner einen Dampferzeuger (24) umfasst.

10. Vorrichtung nach Anspruch 8 oder 9, **dadurch gekennzeichnet, dass** sie ferner einen am zweiten Ende des Wärmetauschers angeordneten Einlass (V1F) für ein anderes Wärmeübertragerfluid in flüssiger Form und einen am ersten Ende des Wärmetauschers angeordneten Ablass (V2F) für dieses Wärmeübertragerfluid in flüssiger und/oder Dampfform umfasst.

11. Vorrichtung nach Anspruch 10, **dadurch gekennzeichnet, dass** der Ablass des anderen Wärmeübertragerfluids in flüssiger und/oder Dampfform bis zu einer Trennvorrichtung (26) stattfindet der mit atmosphärischer Druck (27) verbunden ist.
